# EUROPÄISCHE PATENTSCHRIFT

(11) **EP 1 153 450 B1**
(45) Veröffentlichungstag und Bekanntmachung des Hinweises auf die Patenterteilung: **16.10.2002**
(21) Anmeldenummer: 99962251.7
(22) Anmeldetag: 11.12.1999
(51) Int. Cl.: H01M 6/16, H01M 10/40

(54) **ELEKTROLYTSYSTEM FÜR LITHIUMBATTERIEN UND DESSEN VERWENDUNG SOWIE VERFAHREN ZUR ERHÖHUNG DER SICHERNHEIT VON LITHIUMBATTERIEN**
ELECTROLYTE SYSTEM FOR LITHIUM BATTERIES, THE USE THEREOF AND METHOD FOR ENHANCING SAFETY OF LITHIUM BATTERIES
SYSTEME D'ELECTROLYTE POUR PILES AU LITHIUM ET SON UTILISATION, AINSI QUE PROCEDE POUR ACCROITRE LA SECURITE DES PILES AU LITHIUM

(30) Priorität: 19.12.1998 DE 19858925
(43) Veröffentlichungstag der Anmeldung: 14.11.2001
(73) Patentinhaber: Solvay Fluor und Derivate GmbH, 30173 Hannover (DE)
(72) Erfinder: APPEL, Wolfgang, D-65779 Kelkheim (DE); PASENOK, Sergej, D-65779 Kelkheim (DE); BESENHARD, Jürgen, A-8010 Graz (AT); LIE, Lars, Henning, N-1796 Kornsjo (NO); WINTER, Martin, A-8055 Seiersberg (AT)
(74) Vertreter: Fischer, Reiner
(86) Internationale Anmeldenummer: EP9909828
(87) Internationale Veröffentlichungsnummer: WO00038259

(56) Entgegenhaltungen:
- EP-A- 0 850 920
- EP-A- 0 902 492
- GB-A- 2 260 137
- PATENT ABSTRACTS OF JAPAN vol. 1996, no. 04, 30. April 1996 (1996-04-30) & JP 07 335255 A (NIPPONDENSO CO LTD), 22. Dezember 1995 (1995-12-22)
- PATENT ABSTRACTS OF JAPAN vol. 1998, no. 10, 31. August 1998 (1998-08-31) & JP 10 125352 A (JAPAN STORAGE BATTERY CO LTD), 15. Mai 1998 (1998-05-15)

## Beschreibung

Die Erfindung betrifft Elektrolytsysteme für Lithiumbatterien mit erhöhter Sicherheit und deren Verwendung sowie ein Verfahren zur Steigerung der Sicherheit von Lithiumbatterien.

Tragbare hochwertige elektronische Geräte wie Mobiltelefone, Laptop-Computer, Camcorder etc. erfreuen sich eines extrem schnell wachsenden Marktes. Die adäquate elektrische Versorgung dieser Geräte erfordert leichte Stromquellen von hoher Kapazität und Qualität. Aus Gründen des Umweltschutzes und der Wirtschaftlichkeit finden ganz überwiegend sekundäre, wiederaufladbare Batterien Verwendung. Hier konkurrieren im Wesentlichen drei Systeme: Nickel-Cadmium, Nickel-Metallhydrid und Lithium-ionen Batterien.

Ein weiteres interessantes Gebiet insbesonders für das letztgenannte Batteriesystem könnte der Einsatz in elektrisch betriebenen Fahrzeugen sein.

Wegen ihrer herausragenden Leistungscharakteristik hat die Lithiumbatterie bereits große Marktanteile erworben, obwohl sie in der aktuellen Technik erst im Jahr 1994 in den Markt eingeführt wurde. Trotz des Siegeszuges der sekundären Lithiumbatterie darf jedoch nicht übersehen werden, daß sie unter Sicherheitsaspekten immer noch gegenüber bestimmten Anforderungen verbesserungsbedürftig ist:

Die wiederaufladbaren Lithiumbatterien enthalten meist eine Verbindung aus Lithiumoxid und einem Metalloxid als Kathode (zum Beispiel LiₓMnO₂ oder LiₓCoO₂) und Lithiummetall als Anode, wobei das Lithium bevorzugt als Intercalationsverbindung mit Graphit oder mit Kohle- oder Graphitfasern verwendet wird. Ein Überblick über die Verwendung solcher Batterien wird von K. Brandt gegeben ( Solid state ionics 69 (1994), 173-183, Elsevier Science B.V.).

Als Elektrolytflüssigkeiten zur Erzielung hoher Leitfähigkeiten verwendet man nach derzeitigem Stand der Technik bevorzugt Lösungsmittelgemische von mindestens zwei oder auch mehr Komponenten. Das Gemisch muß mindestens eine stark polare Komponente enthalten, die aufgrund ihrer Polarität auf Salze stark dissoziierend wirkt. Als solche polare Komponenten finden im allgemeinen Ethylencarbonat oder Propylencarbonat Verwendung. Diese hochpolaren Lösungsmittel sind relativ viskos und haben meistens relativ hohe Schmelzpunkte, z.B. 35°C für Ethylencarbonat. Um eine ausreichende Leitfähigkeit auch bei niedrigeren Einsatztemperaturen zu gewährleisten, setzt man daher im allgemeinen noch eine oder mehrere niederviskose Komponenten als "Verdünner" zu. Typische Verdünner sind zum Beispiel 1,2-Dimethoxyethan, Dimethylcarbonat oder Diethylcarbonat. Üblicherweise werden die Verdünner in einem Anteil von 40-60% vom Gesamtvolumen zugesetzt. Ein gravierendes Problem dieser Verdünner-Komponenten liegt in ihrer hohen Flüchtigkeit und den niedrigen Flammpunkten. So weist 1,2-Dimethoxyethan einen Siedepunkt (Sdp.) von 85°C, einen Flammpunkt (Fla.p.) von -6°C und eine Explosionsgrenze im Bereich von zwischen 1,6 und 10,4 Vol.% auf; dieselben Parameter für Dimethylcarbonat lauten: Sdp. 90°C, Fla.p. 18°C. Für diese "Verdünner" gibt es zur Zeit keine gleichwertigen Ersatzstoffe.

Da bei elektrochemischer Anwendung von Elektrolytlösungen und in noch weit stärkerem Maße beim Auftreten von Fehlern (Kurzschluß, Überladen etc.) stets eine Erwärmung eintritt, bedeutet dies - insbesondere beim Aufplatzen der Zelle und Austreten von Lösungsmittel - das Risiko der Entzündung mit den entsprechenden schwerwiegenden Folgen. Dies wird bei den derzeit eingesetzten Systemen durch aufwendige elektronische Regelungen im Prinzip vermieden. Dennoch sind einige Unfälle durch Brände insbesondere bei der Herstellung, wo große Mengen der Lösungsmittel gehandhabt werden, aber auch bei der Nutzung von wiederaufladbaren Lithiumbatterien bekannt geworden.
Eine größere Gefahrenquelle bei der Nutzung entsteht beim Einsatz in Elektrofahrzeugen. Hier werden wesentlich größere Mengen Elektrolytflüssigkeit pro Energiespeicher benötigt und das elektronische Management zahlreicher zusammengeschalteter Zellen ist ungleich schwieriger und beinhaltet entsprechend höhere Risiken.

Zur Erhöhung der Sicherheit können Kathoden und Anodenraum durch eine mikroporöse Separatormembran getrennt werden, die so beschaffen ist, daß beim Überschreiten einer bestimmten Grenztemperatur durch Verschmelzen der Poren der Stromfluß unterbrochen wird.

Weiterhin kann durch Überdrucksicherungen, die auf Gasentwicklung beim Überladen reagieren, und wie bereits erwähnt durch Überwachungs- und Regelelektronik die Sicherheit von Lithiumbatterien erhöht werden.

Weiters werden auch flammhemmende phosphor- und halogenhaltige Zusätze empfohlen, die sich allerdings häufig negativ auf die Leistungscharakteristik der Batterien auswirken.

All diese Maßnahmen können jedoch nicht ausschließen, daß bei Betriebsstörungen der leichtflüchtige und leichtentzündliche "Verdünner" letztlich doch entflammt und nach Ruptur der Zelle ein mit gängigen Löschmitteln kaum mehr beherrschbares Feuer entsteht. Brennendes Lithium reagiert nicht nur mit Wasser, sondern auch mit Kohlendioxid, das häufig in den gängigen Löschgeräten zu finden ist, sehr heftig.

Zum speziellen Stand der Technik werden die Druckschriften
JP-A-7 249432 = D1,
EP-A-0 631339 = D2,
EP-A-0 599534 = D3,
JP-A-10064584 = D4,
US-A-5 169736 = D5,
B. Scrosati, Hrsg., 2^{nd} International Symposium on Polymer Electrolytes, Elsevier, London und New York (1990) = D6,
US-A-5 393621 = D7,
JP-A-6 020719 = D8,
US-A-4 804596 = D9,
US-A-5 219683 = D10,
JP-A-5 028822 = D11 und
EP-A-0 821368 = D12
genannt.

Beispielsweise werden in D1 und D2 hochfluorierte Ether als Elektrolytlösungsmittel oder als Zusätze zu anderen Elektrolyten vorgeschlagen. Diese sind im allgemeinen thermisch und chemisch sehr stabil und haben hohe Flammpunkte. Sie haben jedoch ein viel zu geringes Lösevermögen für die erforderlichen Lithiumlektrolytsalze, um allein verwendet zu werden und sind mit den üblichen Batterielösungsmitteln zu schlecht mischbar.

Teilfluorierte Carbonate sind ebenfalls als Elektrolyte mit erhöhtem Flammpunkt beschrieben (D3). Problematisch ist hier jedoch, daß die aufgrund niedriger Viskosität geeignet erscheinenden Verbindungen nur einen mäßig erhöhten Flammpunkt (37°C) aufweisen und die elektrischen Leitfähigkeiten deutlich unter dem Stand der Technik liegen, vorausgesetzt, daß die in D3 offenbarten Messungen bei Raumtemperatur erfolgten, was wahrscheinlich ist, da keine Meßtemperatur spezifiziert wurde.

Amide sind ebenfalls als Verdünner für wasserfreie Elektrolyte beschrieben, z.B.in D4. Die aufgrund des höheren Siede- und Flammpunktes geeigneten Vertreter der Stoffklasse wie z.B. N,N-Dimethylacetamid sind jedoch so viskos, daß sie allenfalls in geringen Prozentsätzen zugesetzt werden können und nicht im eigentlichen Sinne als "Verdünnerkomponente" fungieren.

D8 offenbart als Elektrolyte für sekundäre Lithiumbatterien Esterverbindungen der Formel R¹COOR², worin wenigstens einer der Reste R¹ und R² eine Fluorsubstitution aufweist. Bevorzugte Verbindung ist Trifluoressigsäuremethylester. Allerdings hat diese Verbindung einen Siedepunkt von nur 43 °C sowie einen Flammpunkt von -7 °C, was für den Fall einer Beschädigung ein sehr hohes Sicherheitsrisiko darstellt.

Nach dem gegenwärtigen Stand der Technik wird verminderte Entflammbarkeit der Elektrolytlösung vor allem durch Viskositätserhöhung der Elektrolytlösung durch Bindemittel oder Füller beziehungsweise durch die Verwendung bei Raumtemperatur praktisch fester polymerer Elektrolyte erreicht.

In der D5 werden zum Beispiel organische oder anorganische Verdickunsmittel (Polyethylenoxid, SiO₂, Al₂O₃ und andere) beschrieben, um flüssige Elektrolytlösungen zu verfestigen.

Polymere Elektrolyte auf der Basis von Makromolekülen mit zahlreichen polaren Gruppen wie etwa Polyethylenoxide, wie sie etwa aus der D6 bekannt sind, sind ebenfalls aufgrund ihrer geringen Flüchtigkeit weitaus schwerer entflammbar.

Ebenso findet man häufig zweifach acylierte Diole oder einfach acylierte Diolmonoalkylether, bei denen die Acylkomponente eine Doppelbindung trägt, d.h. z.B. Acryl- oder Methacrylsäure ist, als Monomerkomponenten für den Aufbau eines solchen gelartigen Polymerelektrolyten. Beispielhaft seien hier die D11 und D12 angeführt.

In der D7 werden polymere Elektrolyte beschrieben, deren polare Makromoleküle durch Polymerisation von Organophosphorverbindungen gebildet werden, welche sich durch besonders geringe Entflammbarkeit auszeichnen.

Allen diesen gelartigen bis festen Elektrolyten ist gemeinsam, daß wegen der hohen Viskosität die Beweglichkeit der Ionen der in ihnen gelösten Salze weitaus geringer ist als in flüssigen Elektrolytlösungen, so daß insbesondere bei tieferen Temperaturen zumindest für die meisten technischen Anwendungen nicht mehr die erforderlichen Leitfähigkeiten erreicht werden.

In D9 werden Ester wie Methylformat und Methylacetat als Verdünnerkomponenten beansprucht. Die Substanzen bieten jedoch sicherheitstechnisch keinerlei Vorteile, da sie ebenfalls sehr niedrige Flamm- und Siedepunkte haben.

Schließlich werden in D10 Dioldiester als Elektrolytkomponenten vorgeschlagen und hiervon speziell 1,2-Diacetoxyethylen als bevorzugte Substanz. Diese hat zwar beim Flammpunkt deutliche Vorteile im Vergleich zu den üblichen Verdünnem, doch ist die Viskosiät der Substanz so hoch, daß man zum Erreichen der erforderlichen Leitfähigkeit wiederum einen der herkömmlichen Verdünner wie Dimethoxyethan zusetzen muß.

Angesichts des hierin angegebenen und diskutierten Standes der Technik war es mithin Aufgabe der Erfindung, neue Elektrolytlösungsmittel, die in Alleinanwendung oder als Zusatz zu bereits bekannten Elektrolytlösungsmitteln einsetzbar sind, zur Verfügung zu stellen, die chemisch und physikalisch stabil sind, mit anderen geeigneten Lösungsmitteln ausreichend mischbar, Lithium-Leitsalze ausreichend lösen und einen deutlich erhöhten Flammpunkt aufweisen, aber dennoch ein Viskositäts- und Leitfähigkeitsverhalten zeigen, das sie für den praktischen Einsatz auch bei tiefen Temperaturen geeignet macht.

Weiters ist es Aufgabe der Erfindung, insbesonders im Hinblick auf die zunehmende Bedeutung wiederaufladbarer Lithiumzellen, solche Elektrolytlösungsmittel oder Zusätze zu bekannten Lösungsmitteln bereitzustelen, die eine einfache Recyclisierbarkeit der Komponenten nicht gefährden oder sogar verbessern oder zumindest fördern.

Noch eine Aufgabe der Erfindung liegt in der Bereitstellung eines Elektrolytsystems für Lithiumbatterien, welches eine erhöhte Sicherheit aufweist.

Außerdem soll das neue Elektrolytsystem eine hinsichtlich der Anwendbarkeit und Gebrauchstauglichkeit verbesserte sekundäre Lithiumbatterie ermöglichen. Insbesondere soll die neue sekundäre Lithiumbatterie allen Sicherheitsanforderungen in hervorragender Weise genügen.

In verfahrenstechnischer Hinsicht fußt die vorliegende Erfindung auf der Aufgabe, sekundäre Lithiumbatterien sicherer zu machen, ohne deren sonstige Eigenschaften wesentlich zu verschlechtern.

Darüberhinaus soll ein Verfahren zur Verfügung gestellt werden, welches die sekundären Lithiumbatterien sicherer macht, ohne die Stabilität und/oder die Leitfähigkeit der Zellen negativ zu beeinflußen,

Abschließend gehörte auch die Angabe der Verwendung von Elektrolytlösungsmitteln oder -zusätzen zu den Aufgaben der Erfindung.

Gelöst werden diese sowie weitere nicht näher angegebene, jedoch sich aus den einleitenden Erörterungen ohne weiteres erschließende oder aus der Einleitung wie selbstverständlich ableitbare Aufgaben durch ein Elektrolytsystem der eingangs erwähnten Art, welches die Merkmale des kennzeichnenden Teils des Anspruches 1 aufweist. Vorteilhafte Abwandlungen des erfindungsgemäßen Elektrolytsystems werden in den abhängigen Produktansprüchen unter Schutz gestellt. Im Hinblick auf das Verfahren zur Erhöhung der Sicherheit von Lithiumbatterien gibt der Gegenstand des entsprechenden Verfahrensanspruchs eine Lösung der der Erfindung zugrundeliegenden Probleme an. Zweckmäßige Verwendungen stellt Anspruch 12 unter Schutz.

Dadurch, daß das Elektrolytsystem für Lithiumbatterien einen wirksamen Gehalt an mindestens einem teilfluorierten Amid der allgemeinen Formel (I)

**R**^{**1**}**CO-NR**^{**2**}**R**^{**3**} (I)

worin
- R¹: eine lineare C₁-C₆-Alkylgruppe ist, in der ein oder mehrere Wasserstoffatome durch Fluor-Atome substituiert sind;
oder eine verzweigte C₃-C₆-Alkylgruppe ist, in der ein oder mehrere Wasserstoffatome durch Fluor-Atome substituiert sind;
oder eine gegebenenfalls ein oder mehrfach mit linearer C₁-C₆-Alkylgruppe und/oder verzweigter C₃-C₆-Alkylgruppe substituierte C₃-C₇-Cycloalkylgruppe ist, in der ein oder mehrere Wasserstoffatome des Cycloalkylrestes und/oder der gegebenenfalls substituierenden linearen und/oder verzweigten Alkylreste durch Fluoratome substituiert sind;
- R² und R³: unabhängig voneinander gleich oder verschieden eine lineare C₁-C₆-Alkylgruppe, eine verzweigte C₃-C₆-Alkylgruppe oder eine C₃-C₇-Cycloalkylgruppe sind,
oder
- R² und R³: gemeinsam mit dem Amidstickstoff einen gesättigten fünf oder sechsgliedrigen, Stickstoff enthaltenden Ring bilden oder mit einem oder mehreren zusätzlichen N- und/oder O-Atom(en) zu einem Ring mit 4 bis 7 Ringgliedem verbunden sind, wobei gegebenenfalls im Ring vorhandene zusätzliche N-Atome mit C₁-C₃-Alkyl abgesättigt sind und auch die Ringkohlenstoffe C₁-C₃-Alkyl tragen können,
aufweist, gelingt es auf besonders vorteilhafte und nicht ohne weiteres vorhersehbare Weise, einen Elektrolyten bereitzustellen, welcher die bekannten Elektrolytsysteme für Lithiumbatterien im üblichen Anforderungsspektrum übertrifft oder ihnen zumindest gleichwertig ist und zugleich eine erhöhte Sicherheit gegenüber den vorbekannten Systemen ermöglicht.
Insbesondere wurde überraschend gefunden, daß Elektrolytsysteme für Lithiumbatterien mit einem Zusatz an teilfluoriertem Amid der allgemeinen Formel I folgende Anforderungen in herausragendem Maße erfüllen:
◆ Hohe thermische Stabilität;
◆ hoher Flammpunkt;
◆ niedriger Dampfdruck;
◆ hoher Siedepunkt;
◆ niedrige Viskosität;
◆ Mischbarkeit mit batterieüblichen Lösungsmitteln, insbesondere mit Ethylencarbonat, Propylencarbonat oder Lactonen,z.B. γ-Butyrolacton;
◆ ausreichende Löslichkeit für fluorhaltige Lithiumleitsalze, beispielsweise LiPF₆, LiN(SO₂CF₃)₂ oder LiC(SO₂CF₃)₃;
◆ hohe Stabilität gegenüber metallischem Lithium;
◆ hohe Zersetzungsspannung
◆ gute filmbildende Eigenschaften. Die anfängliche Ausbildung von geeigneten Schutzfilmen an den Elektroden ist eine für die Lebensdauer der Batterie sehr wichtige Funktion.
◆ gutes Lösevermögen für Kohlendioxid: CO₂ beschleunigt den Aufbau von Schutzfilmen auf Lithium und LiCₙ-Anoden;
◆ gutes Lösevermögen für SO₂: SO₂ verbessert die Leitfähigkeit über den gesamten Temperaturbereich - besonders signifikant bei tieferen Temperaturen - und den Aufbau von Schutzfilmen auf den Elektroden.

Ein ebenfalls wesentlicher Vorteil der erfindungsgemäßen Lösungsmittel besteht darin, daß sie nicht oder nur in untergeordnetem Maße mit Wasser mischbar sind . Dadurch lassen sie sich bei der gebotenen Recyclisierung verbrauchter Zellen einfach von Leitsalz und polaren Komponenten abtrennen und zurückgewinnen.

Die Bezeichnung "linear C₁-C₆-Alkyl", "lineare C₁-C₆-Alkylgruppe" oder "geradkettige Alkylgruppe mit 1 bis 6 Kohlenstoffatomen" umfaßt die Reste Methyl, Ethyl, n-Propyl, n-Butyl, n-Pentyl und n-Hexyl; bevorzugt die Reste Methyl, Ethyl, n-Propyl, n-Butyl und n-Hexyl; zweckmäßig die Reste Methyl, Ethyl, n-Propyl und n-Butyl.

Die Bezeichnung "verzweigt C₃-C₆-Alkyl", "verzweigte C₃-C₆-Alkylgruppe" oder "verzweigte Alkylgruppe mit 3 bis 6 Kohlenstoffatomen" umfaßt unter anderem die Reste Isopropyl, Isobutyl (2-Methylpropyl), sek.-Butyl (1-Methylpropyl), tert.-Butyl (1,1-Dimethylethyl), 1-Methylbutyl, 2-Methylbutyl, Isopentyl (3-Methylbutyl), 1,2-Dimethylpropyl, tert.-Pentyl (1,1-Dimethylpropyl), 2,2-Dimethylpropyl, 3,3-Dimethylpropyl, 1-Ethylpropyl, 2-Ethylpropyl, sowie die verzweigten Hexyle, insbesondere unter anderem 1-Methylpentyl, 2-Methylpentyl, 3-Methylpentyl, 4-Methylpentyl, 1,1-Dimethylbutyl, 2,2-Dimethylbutyl, 3,3-Dimethylbutyl, 1,2-Dimethylbutyl, 1,3-Dimethylbutyl, 2,3-Dimethylbutyl, 1-Ethylbutyl, 2-Ethylbutyl, 3-Ethylbutyl, 1,1,2-Trimethylpropyl, 1,2,2-Trimethylpropyl, 1-Methyl-1-ethylpropyl, 1-Ethyl-2-methylpropyl; bevorzugt die Reste Isopropyl, Isobutyl (2-Methylpropyl), sek.-Butyl (1-Methylpropyl), tert.-Butyl (1,1-Dimethylethyl), 1-Methylbutyl, 2-Methylbutyl, Isopentyl (3-Methylbutyl), 1,2-Dimethylpropyl, tert.-Pentyl (1,1-Dimethylpropyl), 2,2-Dimethylpropyl, 3,3-Dimethylpropyl, 1-Ethylpropyl, 2-Ethylpropyl; zweckmäßig die Reste Isopropyl, Isobutyl (2-Methylpropyl), sek.-Butyl (1-Methylpropyl), tert.-Butyl (1,1-Dimethylethyl).

Die Bezeichnung "C₃-C₇-Cycloalkyl" oder "C₃-C₇-Cycloalkylgruppe" umfaßt Cyclopropyl, Cyclobutyl, Cyclopentyl, Cyclohexyl, Cycloheptyl; bevorzugt Cyclopropyl, Cyclobutyl, Cyclopentyl, Cyclohexyl; zweckmäßig Cyclobutyl, Cyclopentyl;
"C₁-C₆-Alkyl", ohne die Angabe linear oder verzweigt, umfaßt grundsätzlich sowohl linerare als auch verzweigte Reste, bevorzugt die linearen Reste;
"gemeinsam mit dem Amidstickstoff einen gesättigten fünf oder sechsgliedrigen, Stickstoff enthaltenden Ring bildende Reste R² und R³" bedeuten vor allem Pyrrolidinyl und Piperidinyl;
»über ein oder mehrere zusätzliche N- und/oder O-Atome zu einem Ring mit 3 bis 7 Ringgliedern verbundene Reste R² und R³ " bedeuten beispielsweise Oxaziridinyl, Diaziridinyl, 1.3-Oxazetidinyl, 1.3-Diazetidinyl, Oxazolidinyl, Diazolidinyl, Morpholinyl (Tetrahydro-1.4-oxazinyl), Tetrahydro-1.4-diazinyl;
Teilfluorierte Verbindungen oder Reste bedeuten im Rahmen der Erfindung.Verbindungen oder Reste, in welchen wenigstens eines aber nicht alle der mit Kohlenstoff verbundenen Wasserstoffatome der jeweiligen Verbindung oder des jeweiligen Restes durch Fluor ersetzt ist.

Perfluorierte Verbindungen oder Reste sind im Rahmen der Erfindung Verbindungen oder Reste, in denen alle mit Kohlenstoff verbundenen Wasserstoffatome der Verbindung oder des Restes durch Fluor ersetzt sind.

Die erfindungsgemäßen Elektrolytsysteme für Lithiumbatterien mit erhöhter Sicherheit, die wenigstens ein Lithium enthaltendes Leitsalz sowie wenigstens eine Elektrolytflüssigkeit aufweisen beinhalten "einen wirksamen Gehalt" an einer oder mehreren Verbindungen der allgemeinen Formel I.

Hierunter wird im Rahmen der Erfindung eine Menge an teilfluoriertem Amid der Formel I verstanden, die zur Konstruktion einer gebrauchs- und funktionsfähigen sekundären Lithiumbatterie ausreichend ist. Die erfindungsgemäße Lösung des Sicherheitsproblems von sekundären Lithiumbatterien wird durch den Einsatz von Verbindungen der Formel I als wesentlicher Komponente des Elektrolytsystems erreicht.

Grundsätzlich handelt es sich in der Erfindung um Verbindungen, die sich dadurch auszeichnen, daß ein zweifach mit Alkylen substituiertes Amid einer Säure vorliegt, in welchem vor allem der Alkylrest der Säure ein oder mehrere Fluoratome enthält.

Ein Elektrolytsystem mit herausragender Leistungscharakterisik resultiert auch beim Gehalt an einer oder mehreren der Verbindungen I, worin R¹ eine teil- oder perfluorierte geradkettige Alkylgruppe mit 1 bis 4 C-Atomen oder eine teil- oder perfluorierte verzweigte Alkylgruppe mit 3 oder 4 C-Atomen ist.

In noch einer vorteilhaften Ausführungsform kennzeichnet sich ein Elektrolytsystem dadurch, daß Verbindungen der Formel I in ihm enthalten sind, worin der Rest R¹ die Zusammensetzung CₙH₂ₙ₊₁₋ₘFₘ, mit n = 1 bis 6 und m = 1 bis 13 aufweist.

Besonders zweckmäßig hiervon sind Elektrolytsysteme, worin der Rest R¹ die Zusammensetzung CₙH₂ₙ₊₁₋ₘFₘ, mit n = 1 bis 4 und m = 1 bis 9 aufweist.

Von den Verbindungen der allgemeinen Formel I sind unter anderem auch solche Verbindungen von besonderem Interesse, bei denen in der Formel I die Reste R² und R³ gleich oder verschieden linear C₁-C₄-Alkyl oder verzweigt C₃-C₄-Alkyl bedeuten.

Zweckmäßig können aber auch Elektrolytsysteme sein, in denen Verbindungen der Formel I enthalten sind, in denen einer der Reste R² und R³ oder beide gleich oder verschiene Cyclopropyl und/oder Cyclobutyl bedeutet.

Sofern die Reste R² und R³ zu einem Ring zusammengeschlossen sind, enthält dieser Zyklus wenigstens ein Stickstoffatom und ist voll gesättigt. Dabei sind R², R³ also über Methylengruppen -(CH₂)ₙ- zum Ring geschlossen, wobei n 4 oder 5 ist. Hierbei können sich am Ring C₁-C₃-Alkylsubstituenten befinden, der Ring kann Sauerstoff oder C₁-C₃-Alkyl-substituierte Stickstoffatome enthalten, wie zum Beispiel in -(CH₂)ₘ-O-(CH₂)ₚ- oder in -(CH₂)ₘ-N(Alkyl)-(CH₂)ₚ- mit m,p = 1, 2 oder 3 und m + p = 4 oder 5. Außerdem können ein oder mehrere H-Atome durch Fluor ersetzt sein.

Besonders zweckmäßige Elektrolytsysteme ergeben sich, wenn Verbindungen der Formel I im System enthalten sind, bei denen die Reste R² und R³ direkt oder über ein zusätzliches N- oder O-Atom zu einem Ring mit 5 oder 6 Ringgliedem verbunden sind

Die erfindungsgemäße Lösung des Sicherheitsproblems von sekundären Lithiumbatterien wird durch den Einsatz von Verbindungen der Formel I als wesentlicher Komponente des Elektrolytsystems erreicht, wobei man sich unter anderem auch ihre vergleichsweise günstige Viskosität zunutze macht.

Die Stoffe der allgemeinen Formel I lassen sich als Verdünnungsmittel für schwerentflammbare, hochviskose Komponenten verwenden, beispielsweise Ethylencarbonat und Propylencarbonat. Auf diese Weise lassen sich aprotische Elektrolytsysteme herstellen, die praktisch kaum noch entflammbar sind.

Vorzugsweise enthält ein erfindungsgemäßes Elektrolytsystem auch eine wirksame Menge eines Filmbildners, wie beispielsweise Ethylensulfit.

Besonders gute Ergebnissse lassen sich auch erzielen, wenn zur Kombination von Ethylencarbonat oder Propylencarbonat mit einer Verbindung der allgemeinen Formel I zusätzlich noch ein Filmbildner, wie z.B. Ethylensulfit, zugesetzt wird. In derartigen Mischungen lassen sich sogar Graphitelektroden zusammen mit Propylencarbonat einsetzen, was andernfalls eine Zerstörung der Elektrode zur Folge hat.

In einer besonderen Ausführungsform der Erfindung beträgt der Gehalt von Amiden der Formel (I) 2 bis 100, bevorzugt 2 bis 70, zweckmäßig 3 bis 40, Vol.-%, bezogen auf das gesamte Volumen des Elektrolytsystems. Dies impliziert, daß Amide der Formel (I) alleiniges Löse-, aber auch Verdünnungsmittel in einer sekundären Lithiumbatterie sein können.

Die Verbindungen gemäß Formel I in reiner Form können jedoch nicht nur allein als Sicherheitselektrolytflüssigkeiten für nicht-wäßrige Batteriesysteme dienen, sie können auch in Kombination mit bekannten Elektrolytflüssigkeiten wie Carbonaten, Estern, Lactonen, Nitrilen und dergleichen als Elektrolytflüssigkeitensysteme oder - kombinationen eingesetzt werden. Zur zusätzlichen Erhöhung der Leitfähigkeit über den gesamten Temperaturbereich und noch weiteren Verbesserung der Schutzfilmbildung an den Elektroden können sie bestimmte Zusätze (beispielsweise Ethylensulfit oder bestimmte Gase) aufweisen.

Liegt der Anteil der erfindungsgemäß einzusetzenden Amide der Formel I am Elektrolytsystem einer sekundären Lithiumbatterie unter 2 Vol.-%, treten die hierin oben erwähnten Vorteile nicht so ausgeprägt hervor. Üblicherweise liegt der Gehalt bei 3 bis 50.-Vol.-%, vorzugsweise 3 bis 40 Vol.-%, bezogen auf das Gesamtvolumen des Elektrolytsystems. Hierbei stehen im unteren Konzentrationsbereich die filmbildenden Eigenschaften im Vordergrund, während bei höheren Konzentrationen verstärkt die anderen hierin oben angesprochenen vorteilhaften Eigenschaften zum Tragen kommen.

Aufgrund der obigen Erläuterungen handelt es sich ebenfalls um sehr zweckmäßige Abwandlungen der erfindungsgemäßen Elektrolytsysteme wenn neben dem Gehalt an mindestens einem Amid der allgemeinen Formel (I) ein zusätzlicher Gehalt an Ethylencarbonat und/oder Propylencarbonat enthalten ist.

Die teilfluorierten Amide gemäß der Formel I verbessern auch das Lösungsvermögen für unpolare oder wenig polare Gase, insbesondere CO₂, N₂, N₂O, SF₆, SO₂FCl oder SO₂F₂. Diese Gase können vorteilhaft als Schutzgas in Lithiumbatterien eingesetzt werden, da sie einen positiven Effekt auf die an der Grenzfläche Elektrode/Elektrolyt ablaufenden Reaktionen haben [vgl.J.O. Besenhard et. al., J. Power Sources, 44 (1993), 413].

Von besonderem Interesse sind erfindungsgemäße Elektrolytsysteme für sekundäre Lithiumbatterien, worin SO₂ oder CO₂ als Schutzgas zum Einsatz kommen, respektive solche Systeme, die mit SO₂ oder CO₂ gesättigt sind. Hierdurch wird eine ausgesprochen vorteilhafte Schutzfilmbildung an den Elektroden unterstützt.

Besonders zweckmäßige Systeme ergeben sich auch, wenn sie aus den Komponenten Leitsalz, teilfluoriertes Amid der allgemeinen Formel I, Ethylenund/oder Propylencarbonat und SO₂ oder CO₂ bestehen.

Weiterhin bringt das hohe Lösungsvermögen für unpolare Gase auch den zusätzlichen Sicherheitvorteil, daß bei der Entstehung gasförmiger Elektrolytzersetzungsprodukte der Druckaufbau in der Zelle reduziert werden kann.

Besonders zweckmäßige Systeme ergeben sich auch, wenn sie aus den Komponenten Leitsalz, teilfluoriertes Amid der allgemeinen Formel I, Ethylen- und / oder Propylencarbonat und 2-20Vol% eienr weiteren filmbildenden Komponente wie z.B. Ethylensulfit bestehen.

Die Verbindungen der Formel I sind in einigen Fällen kommerziell erhältlich, lassen sich zum Teil nach literaturbekannten Verfahren synthetisieren oder teilweise auch nach modifizierten Literaturverfahren herstellen und sind damit verfügbar. Man geht dabei von einem Ester oder Anhydrid, vorzugsweise von Trifluoressigsäureester oder -anhydrid, aus und setzt mit dem entsprechenden sekundären Amin um.

In der Tabelle 1 sind physikalische Eigenschaften einiger Beispiele für Amide der Formel I zusammengefaßt, daneben steht Dimethylacetamid als Vergleichssubstanz gemäß dem Stand der Technik.

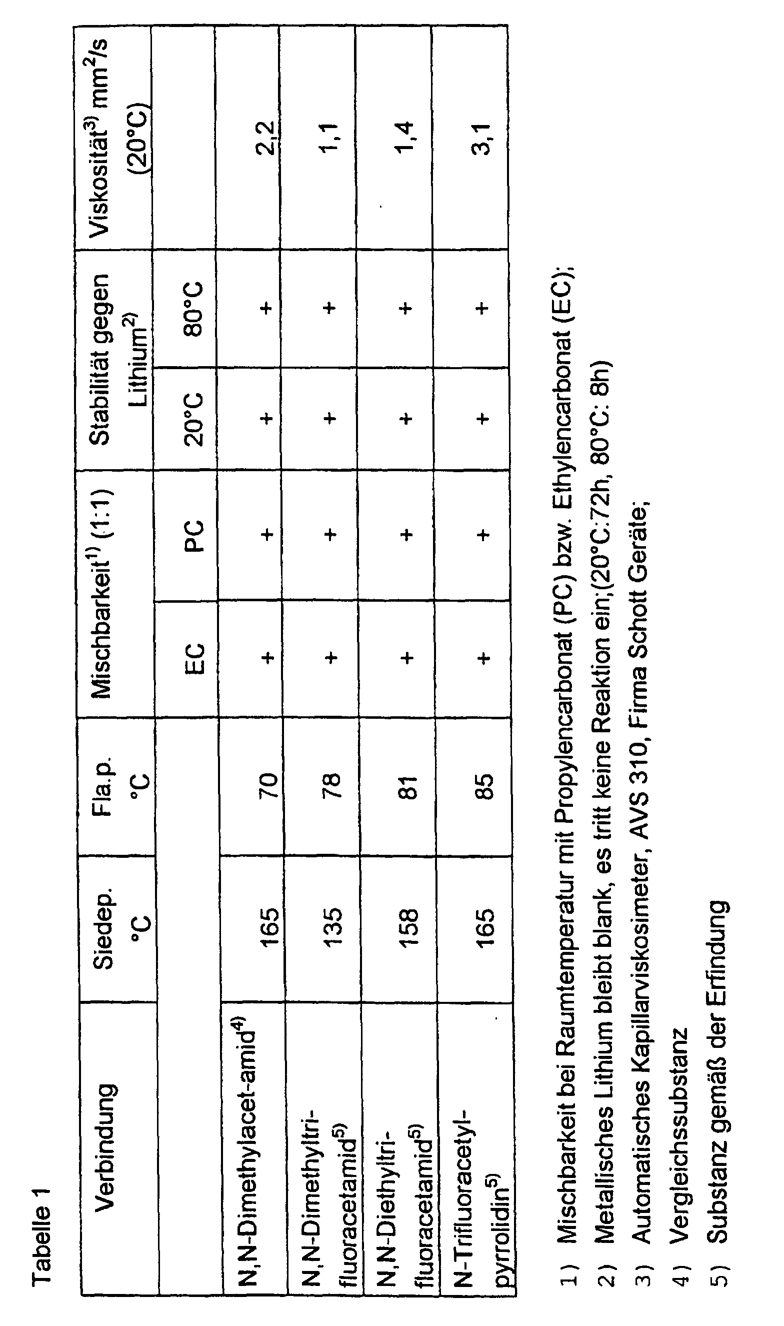

Gegenstand der Erfindung sind auch sekundäre Lithiumbatterien mit erhöhter Sicherheit, die dadurch gekennzeichnet sind, daß sie ein erfindungsgemäßes Elektrolytsystem enthalten.

Die Erfindung stellt auch ein Verfahren zur Erhöhung der Sicherheit einer sekundären Lithiumbatterie zur Verfügung, welches sich dadurch auszeichnet, daß man als Elektrolyt ein erfindungsgemäßes Elektrolytsystem einsetzt.

Schließlich ist Gegenstand der Erfindung auch die Verwendung von Verbindungen der allgemeinen Formel (I) in Sicherheits-Elektrolytsystemen für Lithiumbatterien.

Die nachfolgenden Beispiele veranschaulichen den Gegenstand der Erfindung.

Zur Herstellung des Elektrolyten werden zuerst die verwendeten Lösungsmittelkomponenten wie folgt vorbereitet:

Ethylencarbonat (> 99 %, Firma Merck) wird im Ölpumpenvakuum destilliert (Siedepunkt 85 bis 95 °C) und über aktiviertem Molekularsieb (Firma Roth, Porenweite 4 Angström) bei 150 °C 3 Tage entwässert unter getrockneter Argonatmosphäre (Argon, 99,996 %, Firma AGA, wurde zunächst, um Sauerstoffspuren zu entfernen, bei 150 °C über mit Argon W5 [Gemisch aus 95 % Argon und 5 % Wasserstoff, technische Reinheit, Firma AGA] reduziertes Kupfer-(I)-oxid [Firma BASF] geleitet und anschließend über aktiviertem Molekularsieb getrocknet) bei 60 °C gelagert.

Propylencarbonat (purum, Firma Aldrich) wird im Ölpumpenvakuum über eine 1,5 m lange, verspiegelte Füllkörperkolonne destilliert (Siedepunkt 64 bis 66 °C) und über aktiviertem Molekularsieb unter getrockneter Argonatmosphäre bei Raumtemperatur gelagert. Nach der Reinigung und Trocknung wird der Restwassergehalt der Lösungsmittel nach der Kari-Fischer-Methode (zum Beispiel mit dem automatischen Titriergerät Mitsubishi CA 05) bestimmt. Der Wassergehalt soll unter 10 ppm liegen.

Die fluorierte Lösungsmittelkomponente wird einige Tage über aktiviertem Molekularsieb unter getrockneter Argonatmosphäre bei Raumtemperatur getrocknet.

Die Herstellung der Elektrolytlösungen findet mit der sogenannten Schlenktechnik im getrockneten Argonstrom statt, wobei die verwendeten Glasgeräte mit Schutzgasanschluß vor Gebrauch in der entleuchteten Bunsenbrennerflamme unter mehrmaligem Wechsel von Argonspülung und Ölpumpenvakuumsog von anhaftender Feuchtigkeit befreit werden.

### Beispiel 1

Herstellung eines Sicherheitsbatterie-Elektrolyten auf der Basis von N,N-Dimethyl trifluoracetamid mit Lithium bis(trifluormethansulfon)imid

In 70 ml N,N-Dimethyl trifluoracetamid werden 28,7 g Lithiumbis(trifluormethansulfon)-imid (0,01 mol)("Imid") gegeben und nach Erhalt einer klaren Lösung durch Zusatz des gleichen Lösungsmittels auf 100 ml aufgefüllt. Die Leitfähigkeit des so hergestellten Elektrolyten wurde von -40 bis +60 °C gemessen. Ergebnisse siehe Tabelle 2.

### Beispiel 2

Herstellung eines Sicherheitsbatterie-Elektrolyten auf der Basis von N,N-Dimethyl trifluoracetamid /Propylencarbonat (1:1) mit Lithium bis(trifluormethansulfon)imid.

In einer 1:1 (V/V) Mischung von N,N-Dimethyl trifluoracetamid und Propylencarbonat (PC) werden 28,7 g Imid (0,1 mol) gelöst und anschließend durch Zusatz der gleichen Mischung auf 100 ml aufgefüllt. Die Leitfähigkeit dieses Elektrolyten wurde von -40 bis +60 °C gemessen. Die Ergebnisse sind in Tabelle 2 zu ersehen.

### Beispiel 3

Herstellung eines Sicherheitsbatterie-Elektrolyten auf der Basis von 2:1 (VN) Ethylencarbonat / N,N-Dimethyl trifluoracetamid mit Lithiumhexafluorophosphat.

Die Herstellung des Elektrolyten erfolgte wie in Beispiel 2 mit dem Unterschied, daß als Elektrolytsalz 0,1 mol LiPF₆ eingesetzt und Ethylencarbonat/N,N-Dimethyl trifluoracetamid im Verhältnis 2:1 als Lösungsmittel verwendet wurden. Die Leitfähigkeit dieses Elektrolyten wurde von -60 bis +60 °C bestimmt. Die Ergebnisse sind in Tabelle 2 zu ersehen.

### Beispiel 4

Herstellung eines Sicherheitsbatterie-Elektrolyten auf der Basis von N,N-Dimethyl trifluoracetamid/Dimethoxyethan/Ethylencarbonat mit Lithiumhexafluorophosphat.

Die Herstellung des Elektrolyten erfolgte wie in Beispiel 2 mit dem Unterschied, daß als Elektrolytsalz LiPF₆ eingesetzt wurde, das in einer 1:1:1 Mischung aus N,N-Dimethyltrifluoracetamid/Dimethoxyethan/Ethylencarbonat gelöst wurde. Die Leitfähigkeit dieses Elektrolyten wurde von -60 bis +60 °C bestimmt.
Die Ergebnisse sind in Tabelle 2 dargestellt.

### Beispiel 5

Herstellung eines Sicherheitsbatterie-Elektrolyten auf der Basis von N,N-Dimethyl trifluoracetamid mit Zusatz von Schwefeldioxidgas und Lithiumbis(trifluormethansulfon)-imid.
In 80 ml des mit SO₂-Gas gesättigten Amids wurden 28,7 g (0,1 mol) des lmids gelöst und anschließend mit weiterem SO₂-gesättigtem Amid auf 100 ml aufgefüllt. Die Leitfähigkeit des so erhaltenen Elektrolyten wurde von -60 bis +60 °C bestimmt. Die Ergebnisse sind in Tabelle 2 zu ersehen.

**Tabelle 2**

| Beispiel Nr. | Leitfähigkeit [mS/cm] | | | |
|---|---|---|---|---|
| | -10 [°C] | 0 [°C] | 25 [°C] | 40 [°C] |
| 1 | 3,5 | 4,3 | 6,6 | 8,1 |
| 2 | 2,3 | 3,2 | 5,6 | 7,2 |
| 3 | 7,2 | 7,9 | 8,5 | 10,8 |
| 4 | 10,2 | 12,1 | 13,8 | 17,1 |
| 5 | 5,6 | 6,8 | 9,5 | 11,0 |

## Patentansprüche

1. Elektrolytsystem für Lithiumbatterien mir erhöhter Sicherheit aufweisend wenigstens ein Lithium enthaltendes Leitsalz sowie wenigstens eine Elektrolytflüssigkeit, **gekennzeichnet durch** einen wirksamen Gehalt an mindestens einem teilfluorierten Amid der allgemeinen Formel (I)
**R**^{**1**}**CO-NR**^{**2**}**R**^{**3**} (I)
worin
R¹ eine lineare C₁-C₆-Alkylgruppe ist, in der ein oder mehrere Wasserstoffatome **durch** Fluor-Atome substituiert sind;
oder eine verzweigte C₃-C₆-Alkylgruppe ist, in der ein oder mehrere Wasserstoffatome **durch** Fluor-Atome substituiert sind;
oder eine gegebenenfalls ein oder mehrfach mit linearer C₁-C₆-Alkylgruppe und/oder verzweigter C₃-C₆-Alkylgruppe substituierte C₃-C₇-Cycloalkylgruppe ist, in der ein oder mehrere Wasserstoffatome des Cycloalkylrestes und/oder der gegebenenfalls substituierenden linearen und/oder verzweigten Alkylreste **durch** Fluoratome substituiert sind;
R² und R³ unabhängig voneinander gleich oder verschieden eine lineare C₁-C₆-Alkylgruppe, eine verzweigte C₃-C₆-Alkylgruppe oder eine C₃-C₇-Cycloalkylgruppe sind,
oder
R² und R³ gemeinsam mit dem Amidstickstoff einen gesättigten fünf oder sechsgliedrigen, Stickstoff enthaltenden Ring bilden oder mit einem oder mehreren zusätzlichen N- und/oder O-Atom(en) zu einem Ring mit 4 bis 7 Ringgliedem verbunden sind, wobei gegebenenfalls im Ring vorhandene zusätzliche N-Atome mit C₁-C₃-Alkyl abgesättigt sind und auch die Ringkohlenstoffe C₁-C₃-Alkyl tragen können.

2. Elektrolytsystem nach Anspruch 1, **dadurch gekennzeichnet, daß** R¹ eine teiloder perfluorierte geradkettige Alkylgruppe mit 1 bis 4 C-Atomen oder eine teiloder perfluorierte verzweigte Alkylgruppe mit 3 oder 4 C-Atomen ist.

3. Elektrolytsystem nach Anspruch 1, **dadurch gekennzeichnet, daß** der Rest R¹ die Zusammensetzung CₙH₂ₙ₊₁₋ₘFₘ, mit n = 1 bis 6 und m = 1 bis 13 aufweist.

4. Elektrolytsystem nach Anspruch 3, **dadurch gekennzeichnet, daß** der Rest R¹ die Zusammensetzung CₙH₂ₙ₊₁₋ₘFₘ, mit n = 1 bis 4 und m = 1 bis 9 aufweist.

5. Elektrolytsystem nach einem oder mehreren der vorhergehenden Ansprüche, **dadurch gekennzeichnet, daß** in der Formel I die Reste R² und R³ gleich oder verschieden linear C₁-C₄-Alkyl oder verzweigt C₃-C₄-Alkyl bedeuten.

6. Elektrolytsystem nach einem der vorhergehenden Ansprüche 1 bis 4, **dadurch gekennzeichnet, daß** in der Formel I die Reste R² und R³ direkt oder über ein zusätzliches N- oder O-Atom zu einem Ring mit 5 oder 6 Ringgliedern verbunden sind.

7. Elektrolytsystem nach einem oder mehreren der vorhergehenden Ansprüche, **dadurch gekennzeichnet, daß** der Gehalt von Amiden der Formel (I) 2 bis 100, bevorzugt 2 bis 70, besonders bevorzugt 3 bis 40 Vol.-% des gesamten Elektrolytsystems beträgt.

8. Elektrolytsystem nach einem oder mehreren der vorhergehenden Ansprüche, **dadurch gekennzeichnet, daß** es neben dem Gehalt an mindestens einem Amid der allgemeinen Formel (I) einen zusätzlichen Gehalt an Carbonaten, Estern, Lactonen und/oder Nitrilen, vorzugsweise Ethylencarbonat und/oder Propylencarbonat, aufweist.

9. Elektrolytsystem nach einem oder mehreren der vorhergehenden Ansprüche, **dadurch gekennzeichnet, daß** es mit SO₂ oder CO₂ gesättigt ist.

10. Elektrolytsystem nach einem oder mehreren der vorhergehenden Ansprüche, **dadurch gekennzeichnet, daß** es einen Gehalt an filmbildenden Substanzen, vorzugsweise Ethylensulfit, aufweist.

11. Sekundäre Lithiumbatterie mit erhöhter Sicherheit, **dadurch gekennzeichnet, daß** die Batterie ein Elektrolytsystem gemäß den Ansprüchen 1 bis 10 enthält.

12. Verfahren zur Erhöhung der Sicherheit einer sekundären Lithiumbatterie, **dadurch gekennzeichnet, daß** man als Elektrolyt ein System gemäß den Ansprüchen 1 bis 10 einsetzt.

13. Verwendung von Verbindungen der allgemeinen Formel (I) gemäß den Ansprüchen 1 bis 10 in Sicherheits-Elektrolytsystemen für Lithiumbatterien.

## Claims

1. An electrolyte system for lithium batteries with increased safety, comprising at least one lithium-containing conducting salt and also at least one electrolyte liquid, **characterised by** an effective content of at least one partially fluorinated amide of the general formula (I)
R¹CO-NR²R³ (I)
wherein
R¹ is a linear C₁-C₆-alkyl group, in which one or more hydrogen atoms are substituted by fluorine atoms;
or is a branched C₃-C₆-alkyl group, in which one or more hydrogen atoms are substituted by fluorine atoms;
or is a C₃-C₇-cycloalkyl group optionally substituted one or more times with linear C₁-C₆-alkyl group and/or branched C₃-C₆-alkyl group, in which one or more hydrogen atoms of the cycloalkyl radical and/or of the optionally substituting linear and/or branched alkyl radicals are substituted by fluorine atoms;
R² and R³, independently of each other, are identical or different and are a linear C₁-C₆-alkyl group, a branched C₃-C₆-alkyl group or a C₃-C₇-cycloalkyl group,
or
R² and R³ jointly with the amide nitrogen form a saturated five- or six-membered, nitrogen-containing ring or with one or more additional N and/or O atom(s) are joined to form a ring with 4 to 7 ring members , wherein any additional N atoms present in the ring are saturated with C₁-C₃-alkyl and also may bear the ring carbon atoms C₁-C₃-alkyl.

2. An electrolyte system according to Claim 1, **characterised in that** R¹ is a partially fluorinated or perfluorinated straight-chain alkyl group with 1 to 4 C atoms or a partially fluorinated or perfluorinated branched alkyl group with 3 or 4 C atoms.

3. An electrolyte system according to Claim 1, **characterised in that** the radical R¹ has the composition CₙH₂ₙ₊₁₋ₘFₘ, with n = 1 to 6 and m = 1 to 13.

4. An electrolyte system according to Claim 3, **characterised in that** the radical R¹ has the composition CₙH₂ₙ₊₁₋ₘFₘ, with n = 1 to 4 and m = 1 to 9.

5. An electrolyte system according to one or more of the preceding claims, **characterised in that** in Formula I the radicals R² and R³ are identical or different and linear C₁-C₄-alkyl or branched C₃-C₄-alkyl.

6. An electrolyte system according to one or more of the preceding Claims 1 to 4, **characterised in that** in Formula I the radicals R² and R³ are joined directly or via an additional N or O atom to form a ring having 5 or 6 ring members.

7. An electrolyte system according to one or more of the preceding claims, **characterised in that** the content of amides of Formula (I) is 2 to 100, preferably 2 to 70, particularly preferably 3 to 40, % by volume of the total electrolyte system.

8. An electrolyte system according to one or more of the preceding claims, **characterised in that** in addition to the content of at least one amide of the general formula (I) it has an additional content of carbonates, esters, lactones and/or nitriles, preferably ethylene carbonate and/or propylene carbonate.

9. An electrolyte system according to one or more of the preceding claims, **characterised in that** it is saturated with SO₂ or CO₂.

10. An electrolyte system according to one or more of the preceding claims, **characterised in that** it has a content of film-forming substances, preferably ethylene sulphite.

11. A secondary lithium battery with increased safety, **characterised in that** the battery contains an electrolyte system in accordance with Claims 1 to 10.

12. A method for increasing the safety of a secondary lithium battery, **characterised in that** a system in accordance with Claims 1 to 10 is used as electrolyte.

13. Use of compounds of the general formula (I) in accordance with Claims 1 to 10 in safety electrolyte systems for lithium batteries.

## Revendications

1. Système d'électrolyte pour piles au lithium à la sécurité renforcée, présentant au moins un sel conducteur à base de lithium ainsi qu'au moins un liquide électrolytique, **caractérisé par** une quantité efficace d'au moins un amide partiellement fluoré de formule générale (I) :
R¹CO-NR²R³ (I)
dans laquelle
R¹ est un groupe alkyle linéaire en C₁ à C₆, dans lequel un ou plusieurs atomes d'hydrogène sont substitués par des atomes de fluor ;
ou un groupe alkyle ramifié en C₃ à C₆, dans lequel un ou plusieurs atomes d'hydrogène sont substitués par des atomes de fluor ;
ou un groupe cycloalkyle en C₃ à C₇, éventuellement mono- ou polysubstitué par un groupe alkyle linéaire en C₁ à C₆ et/ou un groupe alkyle ramifié en C₃ à C₆, dans lequel un ou plusieurs atomes d'hydrogène du radical cycloalkyle et/ou des radicaux alkyle linéaires et/ou ramifiés éventuellement substituants sont substitués par des atomes de fluor ;
R² et R³ représentent, indépendamment l'un de l'autre, un groupe alkyle linéaire en C₁ à C₆, un groupe alkyle ramifié en C₃ à C₆, ou un groupe cycloalkyle en C₃ à C₇, identique ou différent ; ou
R² et R³ forment, conjointement avec l'azote amidé, un cycle saturé à base d'azote comportant cinq ou six chaînons, ou sont reliés avec un ou plusieurs atomes de N et/ou O supplémentaires à un cycle comportant 4 à 7 chaînons cycliques, les atomes de N supplémentaires éventuellement présents dans le cycle étant saturés par un groupe alkyle en C₁ à C₃, et les carbones cycliques pouvant eux aussi être porteurs d'un groupe alkyle en C₁ à C₃.

2. Système d'électrolyte selon la revendication 1, **caractérisé en ce que** R¹ est un groupe alkyle à chaîne droite perfluoré ou partiellement fluoré, comportant 1 à 4 atomes de carbone, ou un groupe alkyle ramifié, perfluoré ou partiellement fluoré, comportant 3 ou 4 atomes de carbone.

3. Système d'électrolyte selon la revendication 1, **caractérisé en ce que** le radical R¹ représente CₙH₂ₙ₊₁₋ₘFₘ, où n vaut 1 à 6 et m vaut 1 à 13.

4. Système d'électrolyte selon la revendication 3, **caractérisé en ce que** le radical R¹ représente CₙH₂ₙ₊₁₋ₘFₘ, où n vaut 1 à 4 et m vaut 1 à 9.

5. Système d'électrolyte selon une ou plusieurs des revendications précédentes, **caractérisé en ce que** les radicaux R² et R³ de la formule (I) sont un groupe allyle linéaire en C₁ à C₄, ou un groupe alkyle ramifié en C₃ à C₄, identique ou différent.

6. Système d'électrolyte selon l'une des revendications 1 à 4 précédentes, **caractérisé en ce que** les radicaux R² et R³ de la formule (I) sont reliés à un cycle comportant 5 ou 6 chaînons cycliques, directement ou via un atome de N ou O supplémentaire.

7. Système d'électrolyte selon une ou plusieurs des revendications précédentes, **caractérisé en ce que** la quantité d'amides de formule (I) est comprise entre 2 et 100, de préférence entre 2 et 70, et tout particulièrement entre 3 et 40 % en volume du système d'électrolyte total.

8. Système d'électrolyte selon une ou plusieurs des revendications précédentes, **caractérisé en ce qu'**il présente, outre la quantité d'au moins un amide de formule générale (I), une quantité supplémentaire de carbonates, esters, lactones et/ou nitriles, de préférence de carbonate d'éthylène et/ou de carbonate de propylène.

9. Système d'électrolyte selon une ou plusieurs des revendications précédentes, **caractérisé en ce qu'**il est saturé en SO₂ ou en CO₂.

10. Système d'électrolyte selon une ou plusieurs des revendications précédentes, **caractérisé en ce qu'**il présente une quantité de substances filmogènes, de préférence du sulfite d'éthylène.

11. Accumulateur au lithium à la sécurité renforcée, **caractérisé en ce que** la pile utilise un système d'électrolyte selon les revendications 1 à 10.

12. Procédé pour renforcer la sécurité d'un accumulateur au lithium, **caractérisé en ce que** l'on utilise comme électrolyte un système selon les revendications 1 à 10.

13. Utilisation de composés de formule générale (I) selon les revendications 1 à 10 dans des systèmes d'électrolytes de sécurité pour piles au lithium.
